# EUROPEAN PATENT SPECIFICATION

(11) **EP 2 151 590 B1**
(45) Date of publication and mention of the grant of the patent: **01.12.2010**
(21) Application number: 09163746.2
(22) Date of filing: 25.06.2009
(51) Int. Cl.: F16B 25/10

(54) **Winged fastener**
Mit Flügeln versehenes Befestigungsmittel
Elément de fixation à ailettes

(30) Priority: 06.08.2008 TW 97214069 U
(43) Date of publication of application: 10.02.2010
(73) Proprietor: Sunny Beam Industrial Co., Ltd, Kangshan Kaohsiung (TW)
(72) Inventor: Wu, Min -Jhen, Kaohsiung (TW)
(74) Representative: Chaillot, Geneviève

(56) References cited:
- WO-A-2007/134361
- FR-A- 2 020 439

## Description

### BACKGROUND OF THE INVENTION

### 1. Field of the Invention

The present invention relates to a fastener, particularly to a winged fastener.

### 2. Description of the Related Art

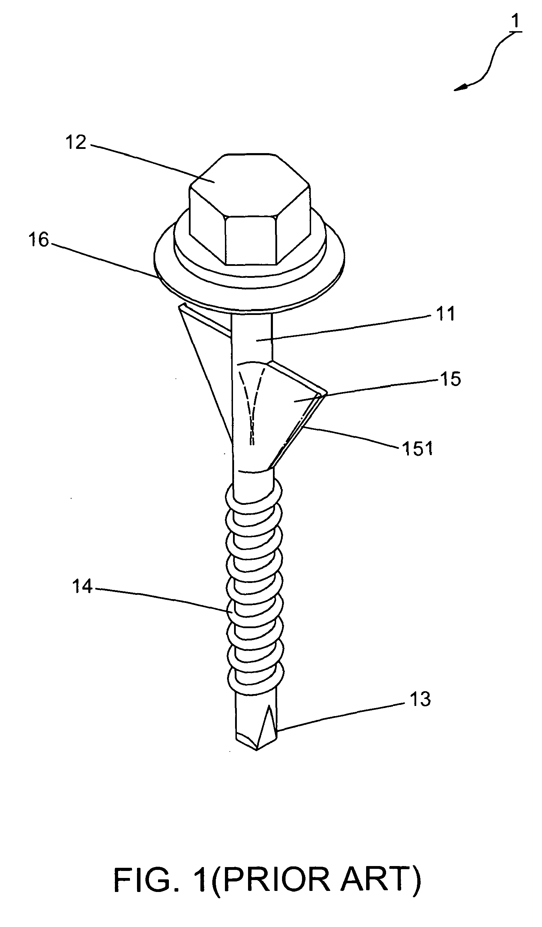

Fig. **1** shows a conventional winged screw **1** including a shank **11,** a head **12** and a drilling tip **13** formed at two extremities of the shank **11,** a thread **14** spiralling on the shank **11,** a pair of wings **15** located between the head **12** and the thread **14,** and a washer **16** sleeved on the shank **11.** Wherein, each wing **15** laterally and curvedly projecting from the inner diameter of the shank **11** to render the shank **11** become oval and form a side face extending from the outermost margin of the wing **15** and downwardly converging to the shank **11;** a cutting ridge **151** is radially convex along an outermost edge of the side face.

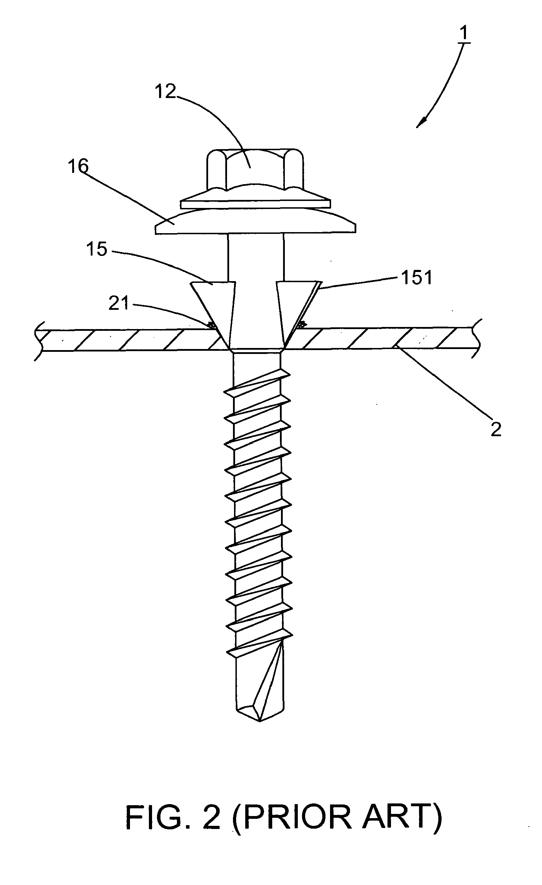

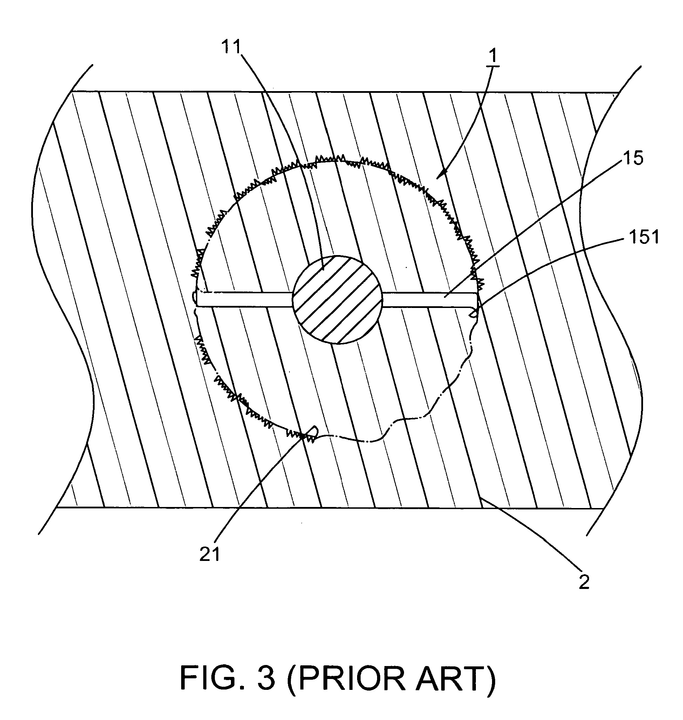

Referring to Figs. **1-3****,** the washer **16** is initially put against the head **12.** Further, the winged screw **1** applies the drilling tip **13** and the thread **14** to create a bore **21** on a panel **2** and keeps embedding the shank **11** thereinto. When the two wings **15** touch the panel surface, two cutting ridges **151** rotatively ream the bore **21** behind the thread **14** and enlarge the bore diameter for incessantly driving the following shank **11** into the panel **2** until the washer **16** densely touches the panel surface for attaining a water-proof effect. Whereas, the wings **15** integrally occupy on partial shank **11** (dotted in Fig. **1**), the strength of the oval shank **1** facilely becomes fragility or even ruptured in the driving process. Further, by the protrusion of the cutting ridge **151** from the side face to render the outermost margin of the wing **15** to be fully engaged with a circumference of the bore **21,** such engagement inevitably incurs a higher friction while continuously driving the shank **11** into the bore **21** and hence makes the cutting ridge subjected to an extreme force in time of chipping and cutting. Therefore, the disadvantages attendant with the winged fastener **1** are to attain an unequal strength for fastening and render the cutting ridges **151** unable to efficiently chip the panel **2** as they facilely become passivation attributably to the higher friction. Moreover, the circumference of the panel bore **21** easily becomes defective and torn under the friction and constraint of the inadequate driving force, which however affects the drilling speed and decreases the water-proof effect as the washer **16** can not well engage with the panel surface.

WO 2007/134361 A discloses a winged fastener whose cutting wings are formed on the shank, equally and angularly spaced around the axis of the shank. Each wing is of substantially planar form and is so shaped that its cutting edge progressively diverges outwardly from the shank in a direction towards the head of the screw. Advantageously, the plane of the wing and thereby its cutting edge is inclined relative to the axis of the shank.

FR 2 020 439 A discloses a fastener having teeth that may be substantially parallel or inclined to the longitudinal axis of the shank. Each tooth has a cutting edge lying between a cutting face and a flank.

### SUMMARY OF THE INVENTION

The objective of the present invention is to provide a winged fastener for benefits of rapidly shearing a smooth bore on a workpiece without much effort, preventing a pressure force from detriment to the workpiece, and preferably increasing a water-proof efficiency.

The winged fastener in accordance with the present invention mainly comprises a head, a shank axially extending from the head, and a drilling point formed on the shank oppositely to the head; wherein, the shank includes a threaded convolution spiralling thereon and two symmetrical wing portions located between the threaded convolution and the head, each includes an upper segment laterally protruding from the shank and a side segment extending downwardly from the upper segment toward the shank, on which the side segment particularly defines a bevel with a surface substantially spreading from an outer side edge of the side segment toward an interior edge thereof for inclining with respect to a shank axis, so as to form a cutting edge along the outer edge of the side segment. Accordingly, by means of dispositions of the bevels and the cutting edges, the wing portions facilitate to expeditiously chip and ream a smooth drilling hole on a workpiece and avoid imparting an inadequate pressure force to result in a passivation of the wing portions, a rapture of the workpiece and an irregular bore circumference. Preferably, a washer is used to densely engage with the workpiece surface for the water-proof effect.

An object of the invention is therefore a winged fastener comprising a shank, a head disposed at an extremity of said shank, and a drilling point formed on the other extremity thereof; wherein, said shank comprising a threaded convolution distributing upwardly from said drilling point and a pair of two symmetrical wing portions located between said threaded convolution and said head, each of said wing portions having an upper segment with an interior margin thereof extending radially and outwardly from said shank and a side segment extending downwardly from an outer margin of said upper segment and terminally tapered at a periphery of said shank; characterized in that said side segment defining a bevel on one side thereof, said bevel extensively expanding from an outer edge of said side segment toward an interior edge thereof by which said bevel providing a surface inclined with respect to a shank axis (α), so as to form a cutting edge along said outer edge of said side segment.

Preferably, an annular sealing washer is disposed between said head and said wing portions.

Preferably, an unthreaded section is formed between said thread convolution.

Preferably, each of said wing port ions defines an extension port ion integrally extending upward toward said head.

Preferably, said shank is formed in a cylindrical shape.

The embodiments of the present invention will be plainly described in the drawings.

### BRIEF DESCRIPTION OF THE DRAWINGS

- Fig. **1**: is a perspective view a convention winged screw;
- Fig. **2**: is a schematic view showing of Fig. 1;
- Fig. **3**: is a cross-sectional view showing of Fig. 1;
- Fig. **4**: is a perspective view of a first preferred embodiment of the present invention;
- Fig. **5**: is a schematic view of Fig. 5 drilling into a workpiece;
- Fig. **6**: is a cross-sectional view showing of Fig. 5;
- Fig. **7**: is a perspective view of a second preferred embodiment; and
- Fig. **8**: is a perspective view of a third preferred embodiment.

### DETAILED DESCRIPTION OF THE PREFERRED EMBODIMENTS

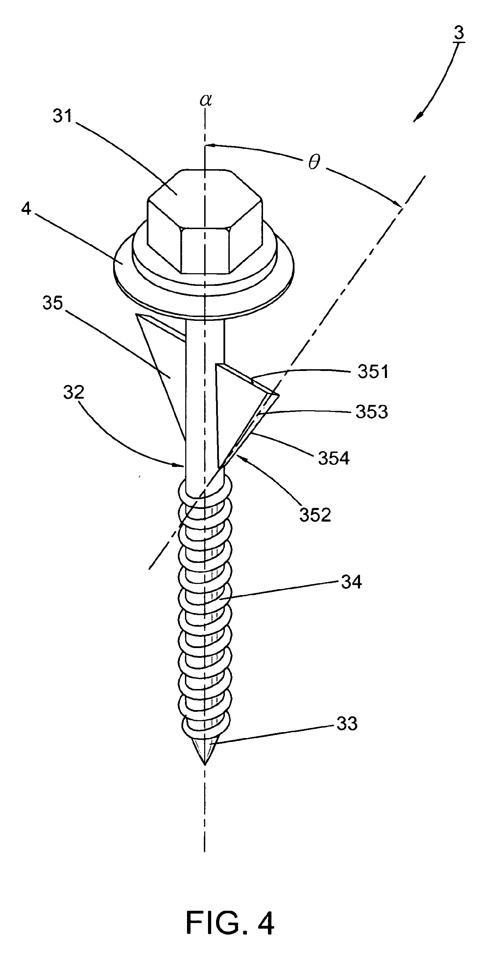

Referring to Figs. **4** shows a first preferred embodiment of the present invention, a winged fastener **3** comprises a shank **32,** a head **31** disposed at an extremity of the shank **32,** and a drilling point **33** formed on the other extremity thereof; wherein, the shank **32** is preferably formed in a cylindrical shape and comprised of a threaded convolution **34** distributing upwardly from the drilling point **33** and a pair of two symmetrical wing portions **35** located between the threaded convolution **34** and the head **31.** The drilling portion **33** can be a drill tip or a sharp end, and herein the latter is adopted; the wing portions **35** respectively develop outwardly from the shank **32** without occupying inner diameters thereof for enhancing the strength of the cylindrical shank **32** while drilling. Additionally, an annular sealing washer **4** is preferably disposed between the head **31** and the wing portions **35.**

Each of the wing portions **35** has an upper segment **351** with an interior margin thereof extending radially and outwardly from the shank **31** and a side segment **352** extending downwardly from an outer margin of the upper segment **351** and terminally tapered at a periphery of the shank **31;** the side segment **352** further defines a bevel **353** on one side thereof, and the bevel **353** extensively expands from an outer edge of the side segment **352** toward an interior edge thereof for creating a bevel surface inclined with respect to a shank axis 'α' by an angle 'θ', thereby forming a cutting edge **354** along the outer edge of the side segment **352.**

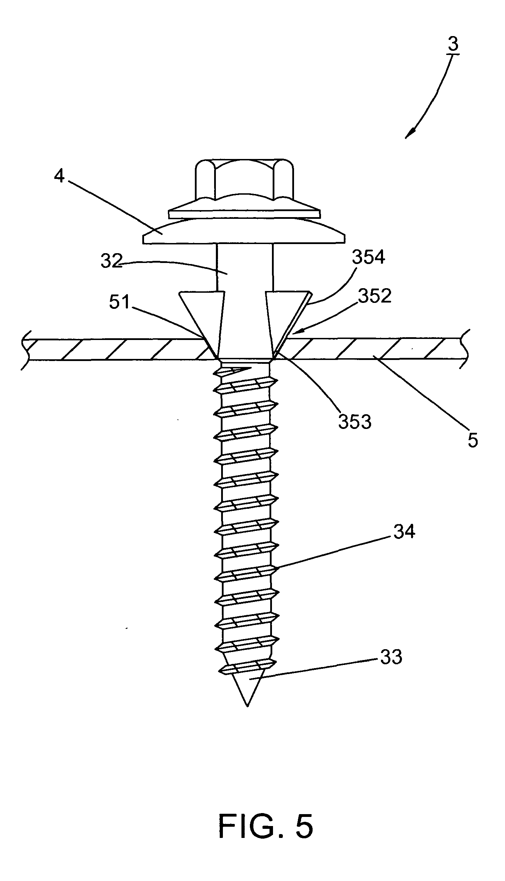

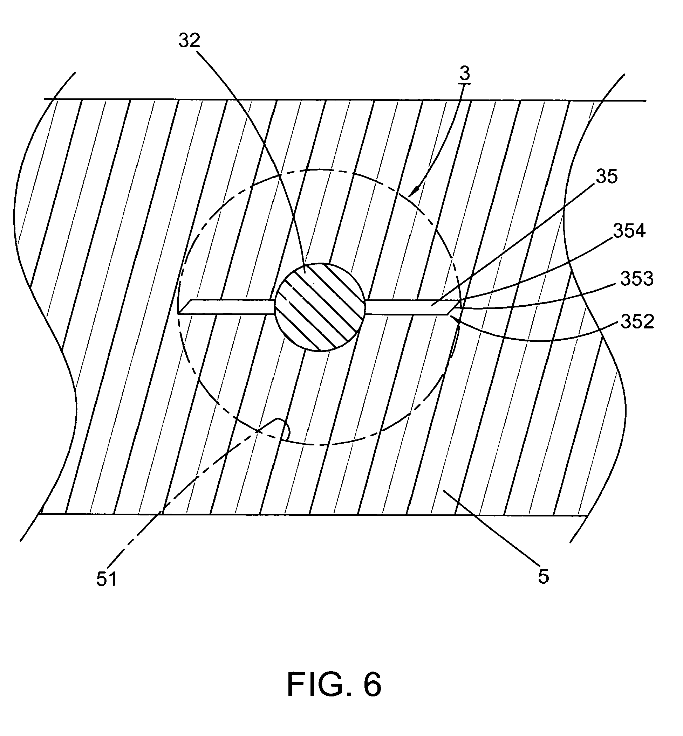

Referring to Figs. **5-6****,** in operation, the drilling point **33** rotably penetrates through a panel **5** to create a bore **51,** and then the thread convolution **34** continuously enters the bore **51.** The cylindrical shank **32** thus permissibly provides enough strength for smoothly driving the winged fastener **3** into the panel **5** without breaking. In the event that the side segment **352** contacts the panel surface, the cutting edge **354** on the bevel **353** with a shape end begins gradually chipping and scraping the bore circumference during the incessant drilling to achieve a reaming effect or enlarge the bore diameter, thereby permitting the following shank **32** to insert into the bore **51** until the washer **4** firmly engages with the panel surface. By means of the cooperation of the bevel **353** and the cutting edge **354,** the outer edge of the side segment **352** provides less extent to fully engage with the bore circumference, and such engagement not only rapidly shears the bore **51** without detriment to the bore circumference (dotted in Fig. **6**) but subjects the cutting edge **354** to a lower friction and driving force without imparting large efforts. Thus, the present invention efficiently prevents the cutting edge **354** from a passivation attributably to the higher friction and avoids tearing an irregular circumference on the enlarged bore **51** and constrainedly rupturing the panel **5** under the driving force, so that the washer **4** could densely touch the panel surface for enhancing a water-proof benefit.

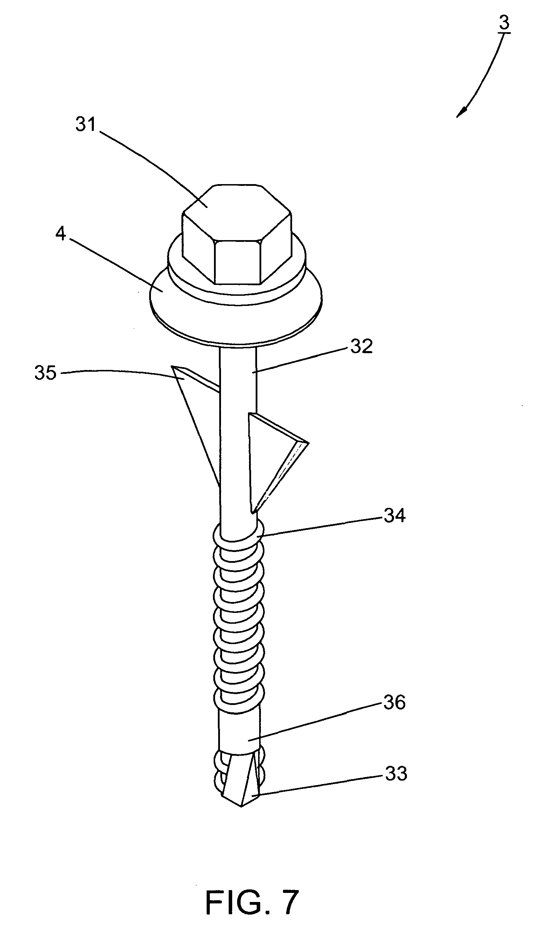

Referring to Fig. **7****,** a second preferred embodiment comprises the same correlated elements as the first embodiment: a head **31,** a shank **32,** a drilling point **33,** a thread convolution **34,** wing portions **35,** and a washer **4.** Differentially, the thread convolution **34** is divided into two sections via an unthreaded section **36,** and the drilling point **33** herein is adopted as a drill tip. Via the modification of the elements, it still attains merits of quickly chipping capability conducive to less effort consumption, decreasing a screwing friction and resistance, and attaining the water-proof effect when the winged fastener **3** is adapted to different workpieces. The operations are the same to the previous embodiment and herein are omitted.

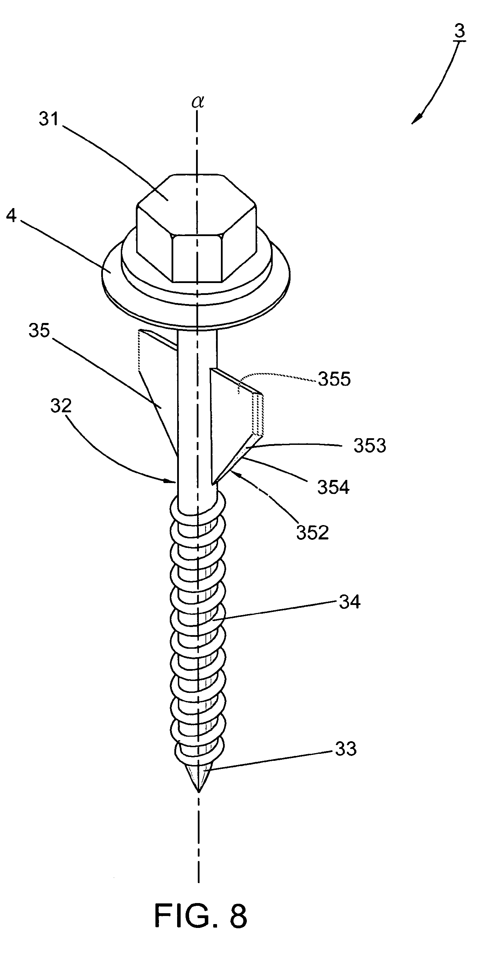

Referring to Fig. **8****,** a third preferred embodiment still comprises the same elements as the first one. Particularly, each of the wing portions **355** defines an extension portion **355** integrally extending upward toward the head **31.** In this manner, the extension portion **355** serves to maintain a regular circumference of the panel bore (not shown in this figure) after the cutting edge **354** gradually sets the smooth bore, so as to prevent from forcedly breaking the panel while drilling and benefit an efficient engagement of the washer **4** with the workpiece surface to attain the water-proof effect. The operations are the same to the previous embodiment and herein are omitted.

To sum up, the present invention mainly takes advantage of the bevel extensively expanding from the outer edge of the side segment toward the shank to form a cutting edge, so that the wing portions facilitate to expeditiously ream a smooth drilling hole on a workpiece and efficiently decrease the friction and driving resistance while in operation, thus avoiding the passivation of the cutting edge and the rapture or the irregular circumference of the workpiece. It preferably accompanies with an annular sealing washer that densely engages with the workpiece surface for increasing a water-proof effect.

Various modifications may be made in the specific details described without departing from the spirit and scope of the invention.

## Claims

1. A winged fastener (3) comprising a shank (32), a head (31) disposed at an extremity of said shank (32), and a drilling point (33) formed on the other extremity thereof; wherein, said shank (32) comprising a threaded convolution (34) distributing upwardly from said drilling point (33) and a pair of two symmetrical wing portions (35) located between said threaded convolution (34) and said head (31), each of saidwingportions (35) having an upper segment (351) with an interior margin thereof extending radially and outwardly from said shank (32) and a side segment (352) extending downwardly from an outer margin of said upper segment (351) and terminally tapered at a periphery of said shank (32);
**characterized in that** said side segment (352) defining a bevel (353) on one side thereof, said bevel (353) extensively expanding from an outer edge of said side segment (352) toward an interior edge thereof by which said bevel (353) providing a surface inclined with respect to a shank axis (α), so as to form a cutting edge (354) along said outer edge of said side segment (352), said bevel (353) on said side segment (352) is furthermore oriented in such a way that the cutting edge (354) lies on the reverse side of the wings relatively to the drilling direction.

2. The winged fastener as claimed in claim 1, wherein, an annular sealing washer (4) is disposed between said head (31) and said wing portions (35).

3. The winged fastener as claimed in claim 1, wherein, an unthreaded section (36) is formed between said thread convolution (34).

4. The winged fastener as claimed in claim 1, wherein, each of said wing portions (355) defines an extension portion (355) integrally extending upward toward said head (31).

5. The winged fastener as claimed in claim 1, wherein, said shank (32) is formed in a cylindrical shape.

## Patentansprüche

1. - Mit Flügeln versehenes Verbindungselement (3), umfassend einen Schaft (32), einen Kopf (31), der an einem Ende des Schafts (32) angeordnet ist, und eine Bohrspitze (33), die an dem anderen Ende davon ausgebildet ist, wobei der Schaft (32) einen Gewindegang (34) umfasst, der sich von der Bohrspitze (33) aus nach oben verteilt, und ein Paar zwei symmetrischer Flügelabschnitte (35), die sich zwischen dem Gewindegang (34) und dem Kopf (31) befinden, wobei jeder der Flügelabschnitte (35) ein oberes Segment (351) aufweist, dessen Innenrand sich von dem Schaft (32) aus radial und nach außen erstreckt, sowie ein Seitensegment (352), das sich vom Außenrand des oberen Segments (351) aus nach unten erstreckt und sich am Ende am Umfang des Schafts (32) verjüngt;
**dadurch gekennzeichnet, dass** das Seitensegment (352) eine Schräge (353) an einer Seite davon definiert, wobei sich die Schräge (353) von einer Außenkante des Seitensegments (352) aus in Richtung einer Innenkante davon stark erweitert, wodurch die Schräge (353) eine Fläche bereitstellt, die zur Schaftachse (α) geneigt ist, um entlang der Außenkante des Seitensegments (352) eine Schneidkante (354) zu bilden, wobei die Schräge (353) an dem Seitensegment (352) weiterhin derart ausgerichtet ist, dass die Schneidkante (354) relativ zur Bohrrichtung auf der Rückseite der Flügel liegt.

2. - Mit Flügeln versehenes Verbindungselement nach Anspruch 1, wobei zwischen dem Kopf (31) und den Flügelabschnitten (35) eine ringförmige Dichtungsscheibe (4) angeordnet ist.

3. - Mit Flügeln versehenes Verbindungselement nach Anspruch 1, wobei zwischen dem Gewindegang (34) ein Abschnitt (36) ohne Gewinde ausgebildet ist.

4. - Mit Flügeln versehenes Verbindungselement nach Anspruch 1, wobei jeder der Flügelabschnitte (355) einen Erweiterungsabschnitt (355) definiert, der sich einteilig nach oben in Richtung Kopf (31) erstreckt.

5. - Mit Flügeln versehenes Verbindungselement nach Anspruch 1, wobei der Schaft (32) zylindrisch geformt ist.

## Revendications

1. - Elément de fixation à ailettes (3) comprenant une tige (32), une tête (31) disposée à une extrémité de ladite tige (32), et un point de perçage (33) formé sur l'autre extrémité de celle-ci ; ladite tige (32) comprenant une hélice filetée (34) s'étendant vers le haut à partir dudit point de perçage (33) et une paire de deux parties d'ailette symétriques (35) disposées entre ladite hélice filetée (34) et ladite tête (31), chacune desdites parties d'ailette (35) ayant un segment supérieur (351) avec un bord intérieur de celui-ci s'étendant radialement et vers l'extérieur à partir de ladite tige (32) et un segment latéral (352) s'étendant vers le bas à partir d'un bord externe dudit segment supérieur (351) et effilé à l'extrémité à une périphérie de ladite tige (32) ;
**caractérisé par le fait que** ledit segment latéral (352) définit un biseau (353) sur un côté de celui-ci, ledit biseau (353) s'étendant de manière extensive à partir d'un bord externe dudit segment latéral (352) vers un bord intérieur de celui-ci ce par quoi ledit biseau (353) fournit une surface inclinée par rapport à un axe de tige (α), de façon à former un bord de coupe (354) le long dudit bord externe dudit segment latéral (352), ledit biseau (353) sur ledit segment latéral (352) étant en outre orienté de telle sorte que le bord de coupe (354) se trouve sur le côté opposé des ailettes par rapport à la direction de perçage.

2. - Elément de fixation à ailettes selon la revendication 1, dans lequel une rondelle d'étanchéité annulaire (4) est disposée entre ladite tête (31) et lesdites parties d'ailette (35).

3. - Elément de fixation à ailettes selon la revendication 1, dans lequel une section non filetée (36) est formée dans ladite hélice filetée (34).

4. - Elément de fixation à ailettes selon la revendication 1, dans lequel chacune desdites parties d'ailette (355) définit une partie d'extension (355) s'étendant d'un seul tenant vers le haut vers ladite tête (31).

5. - Elément de fixation à ailettes selon la revendication 1, dans lequel ladite tige (32) est formée selon une forme cylindrique.
